Europäisches Patentamt

European Patent Office

Office européen des brevets

(11) Veröffentlichungsnummer: **0 282 730**
**A1**

(12) **EUROPÄISCHE PATENTANMELDUNG**

(21) Anmeldenummer: **88101932.7**

(22) Anmeldetag: **10.02.88**

(51) Int. Cl.⁴: **C08L 77/00** , C08K 7/14

(30) Priorität: **19.02.87 DE 3705226**

(43) Veröffentlichungstag der Anmeldung:
**21.09.88 Patentblatt 88/38**

(84) Benannte Vertragsstaaten:
**CH DE ES FR GB IT LI**

(71) Anmelder: **BAYER AG**
**Konzernverwaltung RP Patentabteilung**
**D-5090 Leverkusen 1 Bayerwerk(DE)**

(72) Erfinder: **Laue, Hans-Joachim, Dr.**
**Buschstrasse 169**
**D-4150 Krefeld(DE)**
Erfinder: **Bonten, Heinz**
**An der Heimstätte 23**
**D-4150 Krefeld(DE)**
Erfinder: **Nielinger, Werner, Dr.**
**Bärenstrasse 21**
**D-4150 Krefeld(DE)**
Erfinder: **Michael, Dietrich, Dr.**
**Deswatinesstrasse 57**
**D-4150 Krefeld(DE)**
Erfinder: **Selbeck, Harald, Dr.**
**Erftweg 73**
**D-4150 Krefeld(DE)**
Erfinder: **Wandel, Martin, Dr.**
**Donatusstrasse 17**
**D-4047 Dormagen 11(DE)**

(54) **Glasfaserverstärkte Polyamidformmassen erhöhter Salz- und Witterrungsbeständigkeit.**

(57) Gegenstand der Erfindung sind mit Glasfasern verstärkte Mischungen mit erhöhter Salz-und Witterungsbeständigkeit aus Polyamid 6 oder 66 und Poly(hexamethylisophthalamid) (Polyamid 6I), vorzugsweise Witterungsstabilisator-Zusätze enthaltend.
Die Zusammensetzung entspricht der im Dreistoff-Diagramm bezeichneten Fläche A, B, C, D.

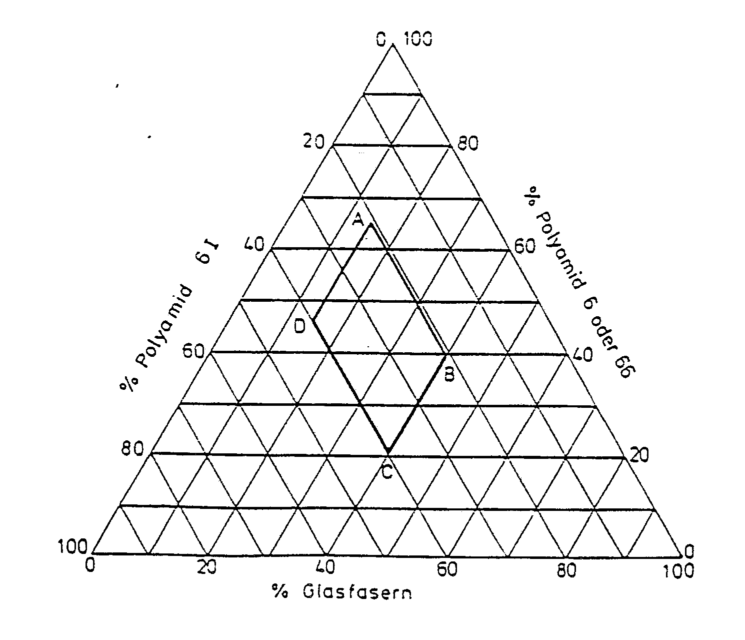

EP 0 282 730 A1

## Glasfaserverstärkte Polyamidformmassen erhöhter Salz-und Witterungsbeständigkeit

Gegenstand der Erfindung sind mit Glasfasern verstärkte Mischungen mit erhöhter Salz-und Witterungsbeständigkeit aus Polyamid 6 oder 66 und Poly(hexamethylenisophthalamid) (Polyamid 6I), vorzugsweise Witterungsstabilisator-Zusätze enthaltend.

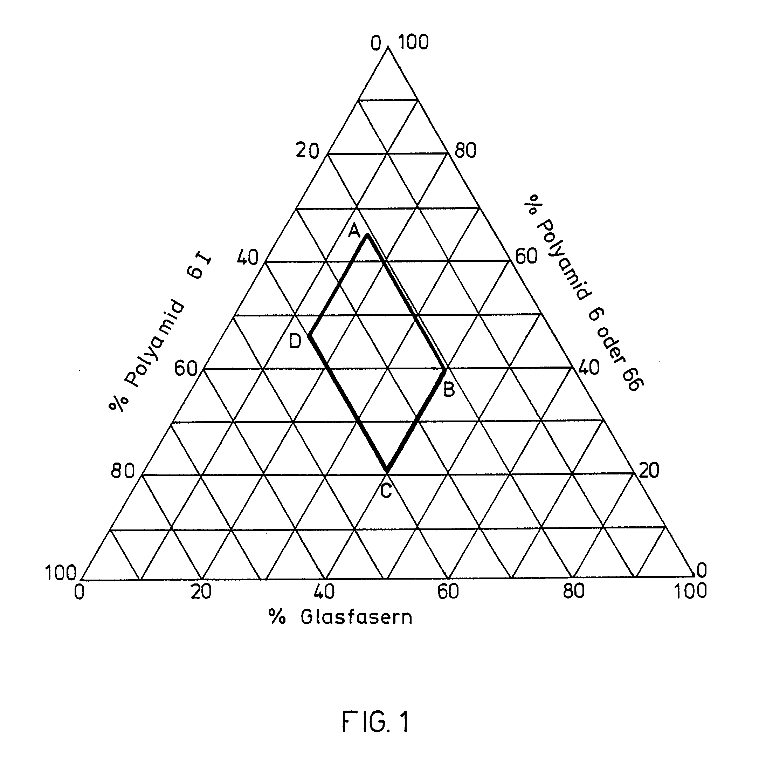

Die Zusammensetzung entspricht der im Dreistoff-Diagramm (Fig. 1) bezeichneten Fläche A, B, C, D.

Polyamide, wie Polyamid 6 und Polyamid 66, sind wegen einer Vielzahl guter Eigenschaften, wie Zähigkeit, Steifigkeit oder Abriebfestigkeit, als Werkstoffe für die Herstellung von Teilen für den technischen Sektor geeignet. Nach der Verstärkung mit Glasfasern nimmt die Steifigkeit weiter zu; andere Eigenschaften, wie Dimensionsstabilität und Wärmeformbeständigkeit, werden ebenfalls erhöht. Derartige Produkte sind nach Zusatz von Witterungsstabilisatoren auch für die Anwendungen im Außen bereich geeignet, das ihre mechanischen Eigenschaften, insbesondere nach Bewitterung und bei tiefen Temperaturen, nur relativ wenig abnehmen.

Nachteilig ist aber die mangelnde Beständigkeit dieser Produkte gegenüber (alkoholischen) Salzlösungen, die nach kurzer Einwirkungsdauer zur Bildung weißer Beläge auf den vorher einwandfreien Oberflächen der Formteile führt. Aus diesem Grunde sind solche Produkte für Anwendungen im Automobilsektor an den Stellen, die der Einwirkung von Salzen und Alkoholen ausgesetzt sind, nicht brauchbar.

Es besteht also die Aufgabe, ein gegen Witterungseinflüsse stabilisiertes, mit Glasfasern verstärktes Polyamid 6 oder 66 bereitzustellen, das durch Salze wie Calciumchlorid auch in Gegenwart von Alkoholen nicht angegriffen wird. Das witterungsstabile Polyamidgemisch soll dabei gegen Salze (Streu-oder Auftausalze) und gegebenenfalls zusätzlich einwirkende alkoholische Frostschutzmittel beständig sein. Die Einhaltung solcher Bedingungen ist unabdingbar für die Verwendung entsprechender Polyamide im Automobilsektor.

Aus der DE-A 3 200 428 sind teilkristalline, glasfaserverstärkte Polyamide bekannt, die zur Beseitigung von Oberflächenstörungen, die sich beim Verspritzen in Angußnähe bilden, bis zu 20 Gew.-% Poly-(hexamethylenisophthalamid) enthalten. Hinsichtlich der Belagbildung durch Einwirkung von Ethanol und Calciumchlorid sind aber diese Polyamidmischungen nicht zufriedenstellend.

Bei den in der DE-A 1 769 040 beschriebenen, glasfaserverstärkten Mischungen aus teilkristallinen Polyamiden und Poly(trimethylhexamethylenterephthalamid) kann man erst durch Zusatz größerer Mengen Poly(trimethylhexamethylenterephthalamid) die Belagbildung vermeiden; die Stabilität dieser Produkte gegen Witterungseinflüsse ist dann aber nicht mehr zufriedenstellend.

In der EP-PS 70 001 werden Mischungen aus einem teilkristallinen und einem speziellen amorphen Polyamid mit verminderter Anfälligkeit gegen die Bildung von Spannungsrissen (Testbedingung: Einwirkung von Zinkchloridlösung) beschrieben. Die Oberflächen der mit Glasfasern verstärkten Produkte können nicht in glänzender glatter Form erhalten werden, sondern sind bereits direkt nach der Herstellung matt.

Überraschenderweise wurde nun gefunden, daß man die Belagbildung durch Einwirkung von wäßrig alkoholischen Calciumchloridlösungen auf glasfaserverstärktes Polyamid 6 und Polyamid 66 vermeiden kann, wenn die Polyamide mehr als 21 Gew.-% Poly(hexamethylenisophthalamid) enthalten. Andererseits sollte der Gehalt an Poly(hexamethylenisophthalamid) 40 Gew.-% auch nicht übersteigen, da sonst die Witterungsbeständigkeit der Produkte für eine Verwendung im Außeneinsatz nicht ausreicht. Bevorzugt enthalten diese Mischungen Witterungsstabilisatoren.

Gegenstand der Erfindung is daher ein gegen Witterungseinflüsse stabilisiertes und mit 15 - 40, vorzugsweise 25 - 35 Gew.-%, Glasfasern verstärktes Polyamid 6 oder 66, das 21 - 40 Gew.-% (Poly-(hexamethylenisophthalamid), bezogen auf die Gesamtmischung, enthält. Diese Mischung kann weiterhin übliche Stabilisatoren und Zusätze enthalten.

Die Zusammensetzung der erfindungsgemäßen faserverstärkten Polyamidmischung wird auch durch das Viereck ABCD in dem Dreistoff/Dreiecksdiagramm nach Fig. 1 gekennzeichnet.

Bei der Verwendung von Polyamid 6 sind 23 - 35 Gew.-%, bei Polyamid 66 21 - 30 Gew.-% Poly-(hexamethylenisophthalamid) bevorzugt. Ganz besonders ist für beide Polyamide der Bereich zwischen 25 und 30 Gew.-% geeignet.

Das Polyamid 6 ist ein Poly-$\epsilon$-caprolactam mit bekannten Molekulargewichtsbereichen, mit einer relativen Viskosität von vorzugsweise 2,7 - 4,0. Das Poly(hexamethylenisophthalamid) soll vorzugsweise eine relative Viskosität von 2,3 - 3,0 haben. Die relative Viskosität des Poly(hexamethylenadipamids) beträgt vorzugweise 2,4 - 4,0. Die relativen Viskositäten werden in dieser Anmeldung im Ubbelohde-Viskosimeter als 1%ige Lösungen in m-Cresol bei 25°C gemessen.

Als Glasfasern sind die handelsüblichen, beschlichteten Fasern aus E-Glas mit einem Durchmesser von 8 -15 μm und mit einem Maximum der Faserlängenverteilung im Bereich von 20 - 600, vorzugsweise 40 bis

350 μm, geeignet.

Zur Stabilisierung gegen Witterungseinflüsse und Hitzeeinwirkung enthalten die verstärkten Polyamidmischungen bevorzugt zusätzlich bekannte Stabilisatoren in üblichen Mengen von 0,01 bis 2,5 Gew.-%, vorzugsweise 0,1 bis 1,5 Gew.-%, insbesondere 0,2 bis 1 Gew.-%, bezogen auf die Mischung. Geeignet sind Stabilisatoren auf der Basis von Salzen des Kupfers, insbesondere Cu-(I)-halogeniden wie CuJ oder CuBr, Alkalihalogeniden, insbesondere Natrium-und Kalium-Bromiden und Jodiden, ferner von bekannten Stabilisatoren wie Phenolen, Phosphiten, aromatischen Aminen und sterisch gehinderten aliphatischen Aminen, insbesondere Lichtschutzmitteln vom Typ des 2,2,6,6-Tetraalkyl-oder 1,2,2,6,6-Pentaalkyl-piperidins (Alkyl insbesondere gleich Methyl), sowie Derivaten des Benztriazols und der Cyanacrylsäure (UV-Stabilisatoren). Bevorzugt sind die Polyamide zumindest mit Kupfersalzen, vorzugsweise Kupfer-I-bromid und/oder Iodid und Alkalihalogeniden, vorzugsweise Natrium-und/oder Kaliumbromid oder -Iodid im Mengen von 0,01 bis 1,0 Gew.-% stabilisiert. Es ist bevorzugt, diesen kupferstabilisierten Polyamiden zusätzlich Phenole, Phosphite, aromatische (Poly)Amine, sterisch gehinderte aliphatische Amine und/oder UV-Absorber in Mengen von 0,2 bis 2,0 Gew.-%, bevorzugt 0,25 bis 1 Gew.-% zuzusetzen. Bevorzugt werden Lichtschutzmittel auf Basis der sterisch gehinderten Tetra-oder Pentaalkylpiperidine, des Benztriazols und/oder der Cyanacrylsäure in Mengen von 0,2 bis 2,0 Gew.-%, bevorzugt 0,25 bis 1 Gew.-% mitverwendet.

Die Herstellung der Mischungen erfolgt üblicherweise z.B. auf handelsüblichen Maschinen, indem man eine gleichmäßige Mischung aus Polyamid 6 bzw. Polyamid 66, Poly(hexamethylenisophthalamid) und den Glasfasern direkt zu Formteilen verarbeitet. Gegebenenfalls kann eine der Komponenten die Glasfasern bereits enthalten oder ein Polyamidgemisch mit den Glasfasern vermengt. Beispiel für ein derart geeignetes Glasfasern enthaltendes Polyamid 6 ist das Durethan® BKV 30 H der Bayer AG, D-5090 Leverkusen. Wesentlich vorteilhafter ist es jedoch, aus der Mischung vor dem Verspritzen durch Compoundieren ein Granulat herzustellen.

Die erfindungsgemäßen, thermoplastisch verarbeitbaren Mischungen können die üblichen Zusätze und Hilfsmittel enthalten, insbesondere weitere Füll-oder Verstärkungsstoffe in geringen Mengen, wie Mikroglaskugeln, Kreide, Quarze, wie Novaculit und Silikate, wie Asbest, Feldspat, Glimmer, Talkum, Wollastonit sowie Kaolin in calcinierter und nicht calcinierter Form. Außerdem sind Farbstoffe und Pigmente, insbesondere Farbruße und/oder Nigrosinbasen, sowie Verarbeitungshilfsmittel zu nennen, ferner die aus dem Stand der Technik bekannten Schlagzähmodifikatoren, besonders solche auf der Basis von gegebenenfalls gepfropften Copolymerisaten des Ethylens oder Pfropfprodukte auf Polybutadienbasis und ungesättigten Vinylmonomeren wie (Meth)Acrylaten, (Meth)Acrylsäure, Acrylnitril, Acrylamid und/oder Styrol.

Beispielhaft zum Stand der Technik seien angeführt: DE-A 3 120 803, DE-A 2 403 889, EP49 103, US 4 496 690, DE-A 2 622 876, DE-A 2 622 973, DE-A 2 401 149, EP-B 9757, EP-B 13 941, FR-PS 1 568 637, DE-A 2 622 973, DE-A 2 906 222, DE-A 3 200 070, DE-A 2 758 615, EP-A 134 937, DE-A 2 941 025 und US 4 338 406.

Bei Verwendung von Weißpigmenten ist es zur Erzielung einer besonders guten Stabilisierung zweckmäßig, anstelle von Titandioxid Zinksulfid einzusetzen.

Da sich die erfindungsgemäßen Mischungen durch eine hohe Unempfindlichkeit gegenüber wäßrig alkoholischen Calciumchloridlösungen bei gleichzeitig guter Witterungsstabilität auszeichnen, eignen sie sich zur Herstellung von Spritzgießteilen für den technischen Bereich, insbesondere für Teile, die der Einwirkung von Salzen ausgesetzt sind, wie z.B. bei Außenanwendungen im Automobilbau.


Beispiele


Die Polyamide (in Form von Granulaten) und die Glasfasern werden in den angegebenen Mengen gemischt und in einem Doppelwellenextruder vom Typ ZSK 53 von Werner und Pfleiderer bei einer Massetemperatur von 280°C compoundiert. Der Strang wird granuliert, getrocknet und zu Prüfkörpern der Größe 60 × 40 × 4 mm verarbeitet.

Die relativen Viskositäten der Ausgangsprodukte, gemessen an einer 1 %igen Lösung in m-Kresol bei 25°C in einem Ubbelohde-Viskosimeter, sind für das Polyamid 6 2,9; für das Polyamid 66 3,0; für das Poly-(hexamethylenisophthalamid) 2,4.

Die Produkte enthalten einen Witterungsstabilisator auf der Basis eines Kupferhalogenids, eines Alkalihalogenids, eines sterisch gehinderten, aliphatischen Amins und einen UV-Absorber. Außerdem sind die Produkte mit Ruß und nur wenig Zinksulfid in einem dunklen Grau pigmentiert.

Zur Prüfung der Belagbildung werden die Prüfkörper in eine Lösung aus gleichen Volumenteilen Ethanol und Wasser, die mit Calciumchlorid gesättigt ist, eingetaucht. Nach 30 min wird die anhaftende

0 282 730

Prüflösung mit destilliertem Wasser abgespült. Die Prüfkörper zeigen im Test nach dem Trocknen bei 100°C keinen bzw. (bei Nichterfüllung) einen mehr oder weniger stark ausgebildeten, weißen Belag and der Oberfläche.

Der Test stellt eine erheblich verschärfte Simulierung der Forderung nach Salz-plus Alkohol-Beständigkeit (Auftau-oder Streusalz plus Frostschutzmittel-Einwirkung) dar. Das Bestehen dieses Testes ist häufig Voraussetzung für den Einbau dieser Produkte im Automobilbau.

Die Bewitterung der Prüfkörper wurde in einem Xenon-Weather-O-Meter der Firma Atlas durchgeführt. Es wurde wechselweise 102 Minuten belichtet und 18 Minuten belichtet plus beregnet (vielfach Wiederholung dieses 2-Stunden-Zyklus bis 750 bzw. 1000 Stunden Gesamtdauer). Die Schwarztafel-Temperatur betrug 50°C. Die Beurteilung der Oberfläche erfolgte visuell.

Tabelle

| Beispiel | 1[x] | 2[x] | 3 | 4 | 5[x] | 6[x] | 7 | 8 | 9[x] | 10[x] |
|---|---|---|---|---|---|---|---|---|---|---|
| Zusammensetzung (Gew.-%) | | | | | | | | | | |
| Polyamid 6 | 70 | 51 | 45 | 40 | | | | | 45 | |
| Polyamid 66 | | | | | 70 | 60 | 45 | 40 | | 45 |
| Polyamid 6 I | | 19 | 25 | 30 | | 10 | 25 | 30 | | |
| Trogamid T | | | | | | | | | 25 | 25 |
| Glasfasern | 30 | 30 | 30 | 30 | 30 | 30 | 30 | 30 | 30 | 30 |
| Belagbildung (in $CaCl_2$-Wasser/Ethanol) | stark | deutlich | keine | keine | stark | deutlich | keine | keine | deutlich | deutlich |
| Bewitterung (Weather-O-Meter-Cyclon) nach insges. 750 h | | | keine Farb-änderung Oberfläche nicht ge-schädigt | | | | keine Farb-änderung Oberfläche nicht ge-schädigt | | Farbauf-hellung | deutliche Farbauf-hellung |
| nach insges. 1.000 h | | | geringe Farb-aufhellung, Oberfläche kaum ge-schädigt | | | | geringe Farb-aufhellung, Oberfläche kaum ge-schädigt | | starke Farbauf-hellung, rauhe Oberflä-che | starke Farbauf-hellung, rauhe Oberfläche |

[x] Vergleichsbeispiele, nicht erfindungsgemäß

Trogamid T ist ein Polyamid aus Terephthalsäure und dem 2,2,4-/2,4,4-Isomerengemisch des Trimethylhexamethylendiamins.

## Ansprüche

1. Gegen Witterungs-und Hitzeeinflüsse stabilisiertes und mit 15 - 40 Gew.-% Glasfasern verstärktes Polyamid 6 oder 66, dadurch gekennzeichnet, daß es 21 - 40 Gew.-%, bezogen auf die Gesamtmischung, Poly(hexamethylenisophthalamid) und gegebenenfalls zusätzlich Witterungs-und/oder Hitzestabilisatoren und/oder übliche Zusätze enthält.

2. Polyamid gemäß Anspruch 1, dadurch gekennzeichnet, daß das Polyamid 6 23 - 35 Gew.-% Poly-(hexamethylenisophthalamid) enthält.

3. Polyamid gemäß Anspruch 1, dadurch gekennzeichnet, daß das Polyamid 66 21 - 30 Gew.-% Poly-(hexamethylenisophthalamid) enthält.

4. Polyamide gemäß Ansprüchen 1 bis 3, dadurch gekennzeichnet, daß 25 bis 30 Gew.-% Poly-(hexamethylenisophthalamid) verwendet werden.

5. Polyamide gemäß Ansprüchen 1 bis 4, dadurch gekennzeichnet, daß sie 0,01 - 2,5 Gew.-%, vorzugsweise 0,1 bis 1,5 Gew.-% Witterungs-und/oder Hitzestabilisatoren enthalten.

6. Polyamide gemäß Anspruch 5, dadurch gekennzeichnet, daß Witterungs-und/oder Hitzestabilisatoren auf der Basis von Salzen des Kupfers, Alkalihalogeniden, Phenolen, Phosphiten, aromatischen (Poly)-Aminen, sterisch gehinderten aliphatischen Aminen, Derivaten des sterisch gehinderten Piperidins, des Benztriazols und/oder der Cyansäure verwendet werden.

7. Polyamide gemäß Ansprüchen 1 bis 6, dadurch gekennzeichnet, daß sie Kupfersalze, vorzugsweise Kupfer-(I)-bromid und/oder -iodid und Alkalihalogenide, vorzugsweise Natrium-und/oder Kaliumbromid oder -iodid in Mengen von 0,01 bis 1,0 Gew.-% enthalten.

8. Polyamide gemäß Ansprüchen 1 bis 6, dadurch gekennzeichnet, daß sie Phenole, Phosphite, aromatische (Poly)Amine, sterisch gehinderte aliphatische Amine und/oder UV-Absorber in Mengen von 0,2 bis 2,0 Gew.-%, bevorzugt 0,25 bis 1 Gew.-%, bevorzugt neben Kupfersalzen, enthalten.

9. Polyamide gemäß Ansprüchen 1 bis 8, dadurch gekennzeichnet, daß sie Derivate des sterisch gehinderten Piperidins, des Benztriazols und/oder der Cyanacrylsäure in Mengen von 0,2 bis 2 Gew.-%, bevorzugt 0,25 bis 1 Gew.-%, bevorzugt neben Kupfersalzen, enthalten.

10. Polyamide gemäß Ansprüchen 1 bis 9, dadurch gekennzeichnet, daß sie als Weißpigment Zinksulfid enthalten.

FIG. 1

**Europäisches Patentamt**

**EUROPÄISCHER RECHERCHENBERICHT**

Nummer der Anmeldung

EP 88 10 1932

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| D,X | DE-A-3 200 428 (BAYER AG)<br>* Beispiel 1; Seite 5, Zeilen 15-25 *<br>--- | 1,3 | C 08 L 77/00<br>C 08 K 7/14 |
| A | PATENT ABSTRACTS OF JAPAN, Band 4, Nr. 101, (C-19)[583], 19. Juli 1980; & JP-A-55 62 959 (TORAY K.K.) 12-05-1980<br>* Zusammenfassung *<br>--- | 1 | |
| A | PATENT ABSTRACTS OF JAPAN, Band 7, Nr. 139 (C-171)[1284], 17. Juni 1983; JP-A-58 53 949 (TORAY K.K.) 30-03-1983<br>* Zusammenfassung *<br>----- | 1 | |

**RECHERCHIERTE SACHGEBIETE (Int. Cl.4)**

C 08 L
C 08 K

Der vorliegende Recherchenbericht wurde für alle Patentansprüche erstellt

| Recherchenort | Abschlußdatum der Recherche | Prüfer |
|---|---|---|
| DEN HAAG | 25-05-1988 | DE LOS ARCOS Y VELAZQUEZ |